Europäisches Patentamt

European Patent Office

Office européen des brevets

(11) Veröffentlichungsnummer: **0 306 914 B1**

## (12) EUROPÄISCHE PATENTSCHRIFT

(45) Veröffentlichungstag der Patentschrift: **09.12.92**

(21) Anmeldenummer: **88114604.7**

(22) Anmeldetag: **07.09.88**

(51) Int. Cl.⁵: **F24D 3/00**

(54) **Übergabestation eines Fernwärmewasser-Kreislaufes.**

(30) Priorität: **09.09.87 CH 3482/87**

(43) Veröffentlichungstag der Anmeldung:
**15.03.89 Patentblatt 89/11**

(45) Bekanntmachung des Hinweises auf die
Patenterteilung:
**09.12.92 Patentblatt 92/50**

(84) Benannte Vertragsstaaten:
**AT CH DE FR GB IT LI NL SE**

(56) Entgegenhaltungen:
**EP-A- 0 063 095**
**DE-A- 2 655 513**

(73) Patentinhaber: **Steinemann AG**
**Wilerstrasse 111**
**CH-9230 Flawil(CH)**

(72) Erfinder: **Briner, Theo**
**Alpsteinstrasse 12**
**CH-9240 Uzwil(CH)**

(74) Vertreter: **Petschner, Goetz**
**Patentanwaltsbüro G. Petschner Wannen-**
**strasse 16**
**CH-8800 Thalwil(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die vorliegende Erfindung betrifft eine Uebergabestation eines Fernwärmewasser-Kreislaufes, der an die Uebergabeseite eines eingangsseitigen Wärmetauschers einer Fernwärme-Uebernahmestation anschliessbar ist, wobei ein Ventil vorgesehen ist, dem ein statischer Wärmezähler vorgeschaltet ist, dessen dem Volumenstrom proportionales Ausgangssignal den Eingang einer einstellbaren Schwellwertschaltstufe bildet, deren Ausgangssignal das Ventil betätigt.

Im Rahmen von Lieferungsverträgen und einer Einsparung von Energie-Bezugskosten ist die verbraucherseitig bezogene Menge von Fernwärmewasser möglichst genau zu begrenzen.

Durch die DE-A-2 655 513 ist eine Regelanordnung der vorgenannten Art bekannt geworden, bei der das Ventil im Verbraucherkreis angesteuert wird, um zuviel Energie an den Verbraucher zu verhindern. Hierfür werden die Messwerte von Temperaturfühler sowie eines Durchsatzmessers und ferner die Messwerte eines Sollwertgebers in Verbindung mit einem Aussentemperaturfühler herangezogen.

Eine Bezugsmengenbegrenzung des Fernwärmewassers zulieferseitig ist damit aber weder möglich noch beabsichtigt.

Um diesem Nachteil vollumfänglich abzuhelfen, zeichnet sich die vorliegende Erfindung nunmehr dadurch aus, dass das Ventil im Rücklauf des Fernwärme-Kreislaufes angeordnet ist und dass die Schwellwertschaltstufe des Wärmezählers auf die maximale Bezugsmenge des zulieferseitigen Fernwärmewassers einstellbar ist.

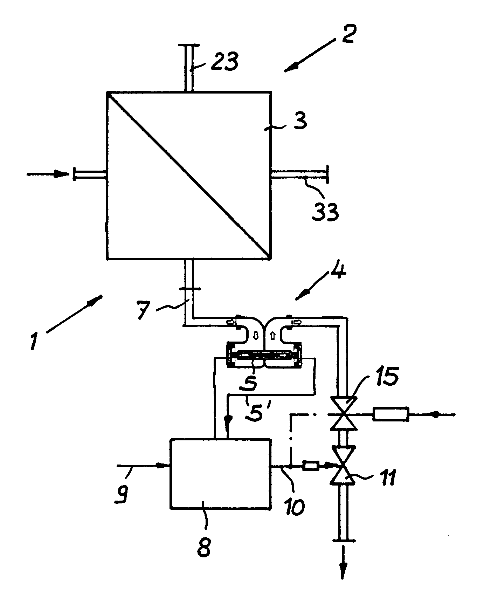

Eine beispielsweise Ausjführungsform des Erfindungsgegenstandes ist nachfolgend anhand der Zeichnung, welche eine erfindungsgemässe Fernwärme-Uebergabestation im Funktionsschema zeigt, näher erläutert.

Um die Energie eines Fernwärmeträgers, in der Regel Wasser, verbraucherseitig nützen zu können, etwa für die Hausheizung oder Boilerheizung, leitet eine Fernwärme-Uebergabestation das Fernwärmewasser mengenbegrenzt durch den eingangsseitigen Wärmetauscher 3 einer Fernwärme-Uebernahmestation 2, die hier nur durch Vorlauf 23 und Rücklauf 33 angedeutet ist.

Erfindungswesentlich ist nunmehr, dass sich vorzugsweise im Rücklauf 7 des Fernwärmewasser-Kreislaufes 1 ein statischer Wärmezähler 4 befindet.

Dieser statische Wärmezähler 4 umfasst in bekannter Weise eine Ultraschallmess-Strecke, deren Ausgangssignal $5'$ proportional dem Volumenstrom im Gehäuse des Wärmezählers 4 ist.

Dieses Signal $5'$ wird dem Eingang einer auf beliebige, der zu begrenzenden maximalen Bezugsmenge entsprechende Schwellwerte einstellbaren Schwellwertschaltstufe 8 zugeführt, welche bei Erreichung der Bezugsmengengrenze ein Ausgangssignal 10 erzeugt, das ein Ventil 11 im Fernwärmewasser-Kreislauf 1 schliesst.

Dieses Ventil 11 ist vorzugsweise zusätzlich und dem Wärmezähler 4 nachgeschaltet.

Anstelle eines zusätzlichen Ventils 11 lässt sich aber ohne weiteres ein bereits vorhandenes Ventil verwenden, beispielsweise ein verbraucherseitig angesteuertes Durchfluss-Regelventil 15, dessen Regelsignal dann bei Erreichung des Maximalbezuges vom Schwellwert-Steuersignal 10 überbrückt wird und dann schliesst.

Aus dem Vorbeschriebenen ergibt sich eine Fernwärme-Uebergabestation, die nunmehr in jedem Leistungsbereich und auf einfache Weise eine wartungsfreie und hochpräzise Mengenbegrenzung gewährleistet.

Im Rahmen der Erfindung liegt es zudem, zur Ueberwachung weitere Parameter beizuziehen, etwa den Druck zu überwachen und daraus weitere Steuersignale zu gewinnen.

## Patentansprüche

1. Uebergabestation eines Fernwärmewasser-Kreislaufes, der an die Uebergabeseite eines eingangsseitigen Wärmetauschers einer Fernwärme-Uebernahmestation anschliessbar ist, wobei ein Ventil vorgesehen ist, dem ein statischer Wärmezähler vorgeschaltet ist, dessen dem Volumenstrom proportionales Ausgangssignal den Eingang einer einstellbaren Schwellwertschaltstufe bildet, deren Ausgangssignal das Ventil betätigt, dadurch gekennzeichnet, dass das Ventil (11 oder 15) im Rücklauf des Fernwärme-Kreislaufes angeordnet ist und dass die Schwellwertschaltstufe (8) des Wärmezählers (4) auf die maximale Bezugsmenge des zulieferseitigen Fernwärmewassers einstellbar ist.

## Claims

1. A relay station of a water circuit for district heating which is suitable for connection onto the delivery side of a heat exchanger on the input side of a receiving station for long-distance heating and in which a valve is provided to which a static temperature meter is disposed upstream thereof, the output signal thereof being proportional to the volume flow and forming the input of an adjustable threshold-value switch step, of which the output signal actuates the valve, wherein the valve (11 or 15) is disposed in the return flow of the long-distance circuit, and that the threshold-value switch step (8) of the temperature meter (4) is adjustable to the maximum reference quantity of the long-distance water on the delivery side.

## Revendications

1. Station de transfert d'un circuit d'eau de chauffage interurbain qui est relié côté transfert à un échangeur thermique à entrée latérale d'une station de transfert de chauffage interurbain, sur lequel une vanne est prévue qui est précédée d'un compteur thermique statique, dont le signal de sortie proportionel au courant volumétrique forme l'entrée d'un plot de commutation à valeur seuil règlable, dont le signal de sortie actionne la vanne, caractérisée en ce que, la vanne (11 ou 15) est disposée au retour du circuit d'eau de chauffage interurbain et que le plot de commutation (8) à valeur seuil du compteur thermique (4) est réglable sur la quantité fournie maximale d'eau de chauffage interurbain côté fournisseur.